# EUROPEAN PATENT APPLICATION

(11) **EP 4 365 232 A1**
(43) Date of publication of application: **08.05.2024**
(21) Application number: 22833004.9
(22) Date of filing: 23.06.2022
(51) Int. Cl.: C08L 27/06, B29C 41/18, B29C 41/36, B32B 5/18, B32B 27/30, B32B 27/40, C08K 5/07, C08K 5/098, C08K 5/3462

(54) **VINYL CHLORIDE RESIN COMPOSITION, VINYL CHLORIDE RESIN MOLDED BODY, AND LAMINATE**

(30) Priority: 30.06.2021 JP 2021109631
(71) Applicant: Zeon Corporation, Tokyo 100-8246 (JP)
(72) Inventor: KARASAKI Takafumi, Tokyo 100-8246 (JP); FUJIWARA Takanori, Tokyo 100-8246 (JP)
(74) Representative: Maiwald GmbH
(86) International application number: PCT/JP2022/025184
(87) International publication number: WO 2023/276857

(57) **Abstract**

Provided is a vinyl chloride resin composition with which color tone variation caused by molding temperature difference is inhibited and that is capable of forming a vinyl chloride resin molded product having few brown spots. The vinyl chloride resin composition contains a vinyl chloride resin, a plasticizer, a uracil compound, zinc acetylacetonate, and a fatty acid metal salt other than a fatty acid zinc salt. The content of the zinc acetylacetonate is not less than 0.5 times the content of the uracil compound, and the content of the fatty acid metal salt is not less than 1.6 times the content of the zinc acetylacetonate. The vinyl chloride resin composition is preferably used in powder molding.

## Description

### TECHNICAL FIELD

The present disclosure relates to a vinyl chloride resin composition, a vinyl chloride resin molded product, and a laminate.

### BACKGROUND

Vinyl chloride resins are used in a variety of applications due to generally having excellent characteristics in terms of cold resistance, heat resistance, oil resistance, and so forth.

Specifically, automobile interior materials such as a surface skin formed of a vinyl chloride resin molded product and a laminate obtained by lining a surface skin formed of a vinyl chloride resin molded product with a foamed product such as foamed polyurethane are used in the formation of automobile interior components such as automobile instrument panels and door trims.

A vinyl chloride resin molded product that constitutes a surface skin of an automobile interior component such as an automobile instrument panel is produced, for example, by performing molding by a powder molding method such as powder slush molding with respect to a vinyl chloride resin composition that contains a vinyl chloride resin, a plasticizer, and additives (for example, refer to Patent Literature (PTL) 1).

As one specific example, a vinyl chloride resin molded product is produced in PTL 1 through powder slush molding of a vinyl chloride resin composition that contains vinyl chloride resin particles, a plasticizer, and additives such as a hydrotalcite stabilizer, a zeolite stabilizer, and a β-diketone.

### CITATION LIST

### Patent Literature

PTL 1: JP-H6-279640A

### SUMMARY

### (Technical Problem)

When a vinyl chloride resin composition is subjected to powder molding, for example, color tone variation of the vinyl chloride resin composition caused by molding temperature difference may arise in a situation in which there is a temperature distribution in the used mold. The occurrence of color tone variation can result in color tone unevenness of a formed vinyl chloride resin molded product. From a viewpoint of reducing color tone unevenness of a vinyl chloride resin molded product, it is desirable to inhibit color tone variation caused by molding temperature difference of a vinyl chloride resin composition.

Studies conducted by the inventors have revealed that color tone variation caused by molding temperature difference can be inhibited by adding a uracil compound and zinc acetylacetonate to a vinyl chloride resin composition.

However, the inventors have found through further studies that there is room for improvement of a vinyl chloride resin composition that contains a uracil compound and zinc acetylacetonate as described above in terms of reducing brown spots that arise at the surface of a vinyl chloride resin molded product obtained through molding of the vinyl chloride resin composition.

Moreover, there is also room for further improvement of a vinyl chloride resin composition that contains a uracil compound and zinc acetylacetonate as described above in terms of inhibiting color tone variation caused by molding temperature difference.

Accordingly, one object of the present disclosure is to provide a vinyl chloride resin composition with which color tone variation caused by molding temperature difference is inhibited and that is capable of forming a vinyl chloride resin molded product having few brown spots.

Another object of the present disclosure is to provide a vinyl chloride resin molded product that is formed using this vinyl chloride resin composition and that has few brown spots.

Yet another object of the present disclosure is to provide a laminate that includes this vinyl chloride resin molded product.

### (Solution to Problem)

The inventors conducted diligent investigation with the aim of solving the problems set forth above. The inventors discovered that by adding a uracil compound, zinc acetylacetonate, and a specific fatty acid metal salt to a vinyl chloride resin composition, by setting a ratio of the content of the zinc acetylacetonate relative to the content of the uracil compound as not less than a specific value, and by setting a ratio of the content of the specific fatty acid metal salt relative to the content of the zinc acetylacetonate as not less than a specific value, it is possible to inhibit color tone variation caused by molding temperature difference while also reducing brown spots at the surface of a formed vinyl chloride resin molded product, and, in this manner, completed the present disclosure.

Specifically, the present disclosure aims to advantageously solve the problems set forth above, and [1] a presently disclosed vinyl chloride resin composition comprises: a vinyl chloride resin; a plasticizer; a uracil compound; zinc acetylacetonate; and a fatty acid metal salt other than a fatty acid zinc salt, wherein content of the zinc acetylacetonate is not less than 0.5 times content of the uracil compound, and content of the fatty acid metal salt is not less than 1.6 times content of the zinc acetylacetonate.

In the case of a vinyl chloride resin composition that contains a vinyl chloride resin, a plasticizer, a uracil compound, zinc acetylacetonate, and a fatty acid metal salt other than a fatty acid zinc salt, by setting a ratio of the content of the zinc acetylacetonate relative to the content of the uracil compound as not less than a specific value and by setting a ratio of the content of the fatty acid metal salt other than a fatty acid zinc salt relative to the content of the zinc acetylacetonate as not less than a specific value in this manner, it is possible to inhibit color tone variation caused by molding temperature difference of the vinyl chloride resin composition while also reducing brown spots at the surface of a vinyl chloride resin molded product obtained through molding of the vinyl chloride resin composition.

[2] In the vinyl chloride resin composition according to the foregoing [1], the uracil compound is preferably indicated by formula (I), shown below, 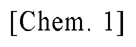 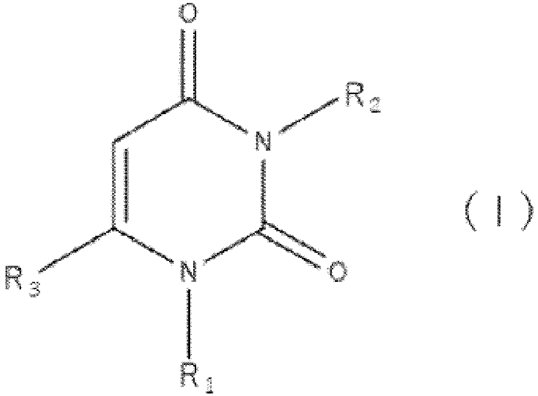 where, in formula (I):
R₁ and R₂ each represent, independently of each other, a hydrogen atom or an electron donating group; and
R₃ represents a hydrogen atom or an amino group.

When the uracil compound is a compound indicated by the specific formula shown above, color tone variation caused by molding temperature difference of the vinyl chloride resin composition can be further inhibited.

[3] In the vinyl chloride resin composition according to the foregoing [1] or [2], the uracil compound preferably includes 6-amino-1,3-dimethyluracil.

When 6-amino-1,3-dimethyluracil is used as the uracil compound, color tone variation caused by molding temperature difference of the vinyl chloride resin composition can be further inhibited.

[4] In the vinyl chloride resin composition according to any one of the foregoing [1] to [3], content of the uracil compound is preferably 0.05 parts by mass or more relative to 100 parts by mass of the vinyl chloride resin.

When the content of the uracil compound in the vinyl chloride resin composition is not less than the specific value set forth above, color tone variation caused by molding temperature difference of the vinyl chloride resin composition can be further inhibited.

[5] In the vinyl chloride resin composition according to any one of the foregoing [1] to [4], the fatty acid metal salt preferably includes either or both of a fatty acid calcium salt and a fatty acid barium salt.

When the vinyl chloride resin composition contains either or both of a fatty acid calcium salt and a fatty acid barium salt as the fatty acid metal salt, color tone variation caused by molding temperature difference of the vinyl chloride resin composition can be further inhibited, and brown spots at the surface of a formed vinyl chloride resin molded product can be further reduced.

[6] In the vinyl chloride resin composition according to any one of the foregoing [1] to [5], the fatty acid metal salt preferably includes a metal salt of a fatty acid having a carbon number of not less than 6 and not more than 22.

When a metal salt of a fatty acid having a carbon number of not less than 6 and not more than 22 is used as the fatty acid metal salt other than a fatty acid zinc salt, color tone variation caused by molding temperature difference of the vinyl chloride resin composition can be further inhibited, and brown spots at the surface of a formed vinyl chloride resin molded product can be further reduced.

[7] The vinyl chloride resin composition according to any one of the foregoing [1] to [6] is preferably used in powder molding.

By using the vinyl chloride resin composition in powder molding, it is easy to obtain a vinyl chloride resin molded product that can be used well as an automobile interior material such as a surface skin for an automobile instrument panel, for example.

[8] The vinyl chloride resin composition according to any one of the foregoing [1] to [7] is preferably used in powder slush molding.

By using the vinyl chloride resin composition in powder slush molding, it is even easier to obtain a vinyl chloride resin molded product that can be used well as an automobile interior material such as a surface skin for an automobile instrument panel, for example.

Moreover, the present disclosure aims to advantageously solve the problems set forth above, and [9] a presently disclosed vinyl chloride resin molded product is obtained through molding of the vinyl chloride resin composition according to any one of the foregoing [1] to [8].

A vinyl chloride resin molded product that is obtained through molding of the vinyl chloride resin composition set forth above in this manner can be used well as an automobile interior material because the vinyl chloride resin molded product has reduced color tone unevenness, few brown spots, and excellent external appearance.

[10] The vinyl chloride resin molded product according to the foregoing [9] is preferably for an automobile instrument panel surface skin.

By using the presently disclosed vinyl chloride resin molded product as a surface skin of an automobile instrument panel, it is possible to produce an automobile instrument panel having a surface skin with reduced color tone unevenness, few brown spots, and excellent external appearance.

Furthermore, the present disclosure aims to advantageously solve the problems set forth above, and [11] a presently disclosed laminate comprises: a foamed polyurethane molded product; and the vinyl chloride resin molded product according to the foregoing [9] or [10].

A laminate that includes a foamed polyurethane molded product and the vinyl chloride resin molded product set forth above has a vinyl chloride resin molded product part with reduced color tone unevenness, few brown spots, and excellent external appearance.

[12] The laminate according to the foregoing [11] is preferably for an automobile instrument panel.

By using the presently disclosed laminate as an automobile instrument panel in this manner, it is possible to reduce color tone unevenness, reduce brown spots, and improve external appearance in a surface skin of the produced automobile instrument panel.

### (Advantageous Effect)

According to the present disclosure, it is possible to provide a vinyl chloride resin composition with which color tone variation caused by molding temperature difference is inhibited and that is capable of forming a vinyl chloride resin molded product having few brown spots.

Moreover, according to the present disclosure, it is possible to provide a vinyl chloride resin molded product that is formed using this vinyl chloride resin composition and that has few brown spots.

Furthermore, according to the present disclosure, it is possible to provide a laminate that includes this vinyl chloride resin molded product.

### DETAILED DESCRIPTION

The following provides a detailed description of embodiments of the present disclosure.

The presently disclosed vinyl chloride resin composition can be used, for example, in formation of the presently disclosed vinyl chloride resin molded product. Moreover, a vinyl chloride resin molded product formed using the presently disclosed vinyl chloride resin composition can suitably be used, for example, as an automobile interior material such as a surface skin included in an automobile interior component such as an automobile instrument panel or a door trim.

The presently disclosed vinyl chloride resin molded product can be used, for example, in formation of the presently disclosed laminate. Moreover, a laminate formed using the presently disclosed vinyl chloride resin molded product can suitably be used, for example, as an automobile interior material used in production of an automobile interior component such as an automobile instrument panel or a door trim.

### (Vinyl chloride resin composition)

Features of the presently disclosed vinyl chloride resin composition are that it contains: (a) a vinyl chloride resin; (b) a plasticizer; (c) a uracil compound; (d) zinc acetylacetonate; and (e) a fatty acid metal salt other than a fatty acid zinc salt, that a ratio of the content of the (d) zinc acetylacetonate relative to the content of the (c) uracil compound is not less than a specific value, and that a ratio of the content of the (e) fatty acid metal salt relative to the content of the (d) zinc acetylacetonate is not less than a specific value. Note that when referring to simply the "(e) fatty acid metal salt" in the present specification, this means a fatty acid metal salt other than a fatty acid zinc salt.

The presently disclosed vinyl chloride resin composition can optionally further contain a β-diketone other than zinc acetylacetonate (hereinafter, also referred to as the "(f) other β-diketone").

Moreover, the presently disclosed vinyl chloride resin composition can optionally further contain (g) a fatty acid zinc salt.

Furthermore, the presently disclosed vinyl chloride resin composition may further contain additives other than the (a) vinyl chloride resin, (b) plasticizer, (c) uracil compound, (d) zinc acetylacetonate, (e) fatty acid metal salt, (f) other β-diketone, and (g) fatty acid zinc salt.

The presently disclosed vinyl chloride resin composition can inhibit color tone variation caused by molding temperature difference and is capable of forming a vinyl chloride resin molded product having few brown spots as a result of containing at least the (a) vinyl chloride resin, (b) plasticizer, (c) uracil compound, (d) zinc acetylacetonate, and (e) fatty acid metal salt, the ratio of the content of the (d) zinc acetylacetonate relative to the content of the (c) uracil compound being not less than a specific value, and the content of the (e) fatty acid metal salt relative to the content of the (d) zinc acetylacetonate being not less than a specific value.

Consequently, by using the presently disclosed vinyl chloride resin composition, it is possible to obtain a vinyl chloride resin molded product that is suitable as an automobile interior material, such as a surface skin for an automobile instrument panel or a surface skin for a door trim, having reduced color tone unevenness, few brown spots, and excellent external appearance.

Moreover, a vinyl chloride resin molded product that is formed using the presently disclosed vinyl chloride resin composition can inhibit the occurrence of discoloration such as yellowing even in a situation in which the vinyl chloride resin molded product is heated to a high temperature of 270°C or higher, for example.

Note that from a viewpoint of easily obtaining a vinyl chloride resin molded product that can be used well as an automobile interior material using the presently disclosed vinyl chloride resin composition, for example, the presently disclosed vinyl chloride resin composition is preferably used in powder molding, and is more preferably used in powder slush molding.

### <(a) Vinyl chloride resin>

A particulate vinyl chloride resin is normally used as the (a) vinyl chloride resin. For example, one type or two or more types of vinyl chloride resin particles can be included as the (a) vinyl chloride resin, and one type or two or more types of vinyl chloride resin fine particles can optionally be further included as the (a) vinyl chloride resin. In particular, the (a) vinyl chloride resin preferably includes at least vinyl chloride resin particles, and more preferably includes vinyl chloride resin particles and vinyl chloride resin fine particles.

Conventionally known production methods such as suspension polymerization, emulsion polymerization, solution polymerization, and bulk polymerization can be used to produce the (a) vinyl chloride resin.

In the present specification, the term "resin particles" is used to refer to particles having a particle diameter of 30 µm or more, whereas the term "resin fine particles" is used to refer to particles having a particle diameter of less than 30 µm.

Examples of the (a) vinyl chloride resin include homopolymers composed of vinyl chloride monomer units and vinyl chloride copolymers preferably comprising 50 mass% or more of vinyl chloride monomer units, and more preferably comprising 70 mass% or more of vinyl chloride monomer units. Specific examples of monomers (comonomers) that are copolymerizable with vinyl chloride monomer and can be used to form a vinyl chloride copolymer include monomers described in WO2016/098344A1, for example. One of these components may be used individually, or two or more of these components may be used in combination in a freely selected ratio.

### «Vinyl chloride resin particles»

In the vinyl chloride resin composition, the vinyl chloride resin particles normally function as a matrix resin (base material). The vinyl chloride resin particles are preferably produced by suspension polymerization.

### [Average degree of polymerization]

The average degree of polymerization of a vinyl chloride resin forming the vinyl chloride resin particles is preferably 800 or more, and more preferably 1,000 or more, and is preferably 5,000 or less, more preferably 3,000 or less, and even more preferably 2,800 or less. This is because sufficient physical strength of a vinyl chloride resin molded product formed using the vinyl chloride resin composition can be ensured while also improving tensile characteristics (particularly tensile elongation), for example, when the average degree of polymerization of the vinyl chloride resin forming the vinyl chloride resin particles is not less than any of the lower limits set forth above. A vinyl chloride resin molded product having good tensile elongation can suitably be used as an automobile interior material, such as a surface skin of an automobile instrument panel, that has excellent ductility and that ruptures as designed without scattering of fragments when an airbag expands and is deployed, for example. Moreover, meltability of the vinyl chloride resin composition can be improved when the average degree of polymerization of the vinyl chloride resin forming the vinyl chloride resin particles is not more than any of the upper limits set forth above.

The "average degree of polymerization" referred to in the present disclosure can be measured in accordance with JIS K6720-2.

### [Average particle diameter]

The average particle diameter of the vinyl chloride resin particles is normally 30 µm or more, preferably 50 µm or more, and more preferably 100 µm or more, and is preferably 500 µm or less, and more preferably 200 µm or less. This is because powder fluidity of the vinyl chloride resin composition improves when the average particle diameter of the vinyl chloride resin particles is not less than any of the lower limits set forth above. Moreover, meltability of the vinyl chloride resin composition further improves and surface smoothness of a vinyl chloride resin molded product formed using the composition can be improved when the average particle diameter of the vinyl chloride resin particles is not more than any of the upper limits set forth above.

The "average particle diameter" referred to in the present disclosure can be measured as the volume-average particle diameter by laser diffraction in accordance with JIS Z8825.

### [Proportional content]

The proportional content of the vinyl chloride resin particles in the (a) vinyl chloride resin is preferably 70 mass% or more, and more preferably 80 mass% or more, can be 100 mass%, and is preferably 95 mass% or less, and more preferably 90 mass% or less. This is because sufficient physical strength of a vinyl chloride resin molded product formed using the vinyl chloride resin composition can be ensured while also improving tensile elongation when the proportional content of the vinyl chloride resin particles in the (a) vinyl chloride resin is not less than any of the lower limits set forth above. Moreover, powder fluidity of the vinyl chloride resin composition improves when the proportional content of the vinyl chloride resin particles in the (a) vinyl chloride resin is not more than any of the upper limits set forth above.

### «Vinyl chloride resin fine particles»

In the vinyl chloride resin composition, the vinyl chloride resin fine particles normally function as a dusting agent (powder fluidity modifier). The vinyl chloride resin fine particles are preferably produced by emulsion polymerization.

### [Average degree of polymerization]

The average degree of polymerization of a vinyl chloride resin forming the vinyl chloride resin fine particles is preferably 500 or more, and more preferably 700 or more, and is preferably 2,600 or less, and more preferably 2,400 or less. This is because powder fluidity of the vinyl chloride resin composition improves, and tensile elongation of a molded product obtained using the composition improves when the average degree of polymerization of the vinyl chloride resin forming the vinyl chloride resin fine particles that serve as a dusting agent is not less than any of the lower limits set forth above. Moreover, meltability of the vinyl chloride resin composition improves, and surface smoothness of a vinyl chloride resin molded product formed using the composition improves when the average degree of polymerization of the vinyl chloride resin forming the vinyl chloride resin fine particles is not more than any of the upper limits set forth above.

### [Average particle diameter]

The average particle diameter of the vinyl chloride resin fine particles is normally less than 30 µm, preferably 10 µm or less, and more preferably 5 µm or less, and is preferably 0.1 µm or more, and more preferably 1 µm or more. This is because the vinyl chloride resin fine particles are not too small to function as a dusting agent, for example, and powder fluidity of the vinyl chloride resin composition improves when the average particle diameter of the vinyl chloride resin fine particles is not less than any of the lower limits set forth above. Moreover, meltability of the vinyl chloride resin composition further increases, and surface smoothness of a formed vinyl chloride resin molded product can be further improved when the average particle diameter of the vinyl chloride resin fine particles is not more than any of the upper limits set forth above.

### [Proportional content]

The proportional content of the vinyl chloride resin fine particles in the (a) vinyl chloride resin may be 0 mass%, but is preferably 5 mass% or more, and more preferably 10 mass% or more, and is preferably 30 mass% or less, and more preferably 20 mass% or less. This is because powder fluidity of the vinyl chloride resin composition improves when the proportional content of the vinyl chloride resin fine particles in the (a) vinyl chloride resin is not less than any of the lower limits set forth above. Moreover, physical strength of a vinyl chloride resin molded product formed using the vinyl chloride resin composition can be further increased when the proportional content of the vinyl chloride resin fine particles in the (a) vinyl chloride resin is not more than any of the upper limits set forth above.

### <(b) Plasticizer>

The presently disclosed vinyl chloride resin composition contains (b) a plasticizer. As a result of the vinyl chloride resin composition containing the (b) plasticizer, a formed vinyl chloride resin molded product can display sufficient flexibility, and thus can suitably be used as an automobile interior material, for example.

The content of the (b) plasticizer in the vinyl chloride resin composition is preferably 50 parts by mass or more, more preferably 60 parts by mass or more, even more preferably 70 parts by mass or more, further preferably 80 parts by mass or more, and even further preferably 90 parts by mass or more relative to 100 parts by mass of the (a) vinyl chloride resin, and is preferably 200 parts by mass or less, more preferably 180 parts by mass or less, even more preferably 160 parts by mass or less, further preferably 140 parts by mass or less, and even further preferably 120 parts by mass or less relative to 100 parts by mass of the (a) vinyl chloride resin. When the content of the (b) plasticizer in the vinyl chloride resin composition is not less than any of the lower limits set forth above relative to 100 parts by mass of the (a) vinyl chloride resin, flexibility of a formed vinyl chloride resin molded product can be increased. Moreover, when the content of the (b) plasticizer in the vinyl chloride resin composition is not less than any of the lower limits set forth above, precipitation (blooming) of components at the surface of a formed vinyl chloride resin molded product can be inhibited. In other words, blooming resistance of a vinyl chloride resin molded product can be increased. On the other hand, when the content of the (b) plasticizer in the vinyl chloride resin composition is not more than any of the upper limits set forth above relative to 100 parts by mass of the (a) vinyl chloride resin, powder fluidity of the vinyl chloride resin composition can be improved.

Although no specific limitations are placed on the (b) plasticizer that is contained in the presently disclosed vinyl chloride resin composition, it is preferable to use (b1) a polyester and (b2) a trimellitic acid ester, for example. Note that plasticizers other than the (b1) polyester and (b2) trimellitic acid ester (hereinafter, also referred to as "(b3) other plasticizers") may be used as the (b) plasticizer.

### <<(b1) Polyester>>

The (b) plasticizer preferably includes (b1) a polyester. Through inclusion of the (b1) polyester in the (b) plasticizer, heat shrinkage resistance of a formed vinyl chloride resin molded product can be increased.

The (b1) polyester that can be included in the (b) plasticizer is not specifically limited and can, for example, be a polyester such as a polyester including a structural unit derived from adipic acid (adipic acid-based polyester), a polyester including a structural unit derived from sebacic acid (sebacic acid-based polyester), or a polyester including a structural unit derived from phthalic acid (phthalic acid-based polyester). One of these polyesters may be used individually, or two or more of these polyesters may be used as a mixture in a freely selected ratio.

In particular, from a viewpoint of further inhibiting color tone variation caused by molding temperature difference of the vinyl chloride resin composition and further increasing heat shrinkage resistance after heating of a formed vinyl chloride resin molded product, it is preferable to use a polyester that includes a structural unit derived from adipic acid as the (b1) polyester, and particularly preferable to use a polyester that includes a structural unit derived from adipic acid and a structural unit derived from 3-methyl-1,5-pentanediol as the (b1) polyester.

In order to facilitate description, a polyester including an adipic acid-derived structural unit and a 3-methyl-1,5-pentanediol-derived structural unit is referred to below as a "polyester A".

Although the polyester A including the specific structural units described above may include structural units other than an adipic acid-derived structural unit and a 3-methyl-1,5-pentanediol-derived structural unit, the total of adipic acid-derived structural units and 3-methyl-1,5-pentanediol-derived structural units is preferably 50 mass% or more of all structural units, and more preferably 80 mass% or more of all structural units. Moreover, the polyester A including the specific structural units described above preferably only includes an adipic acid-derived structural unit and a 3-methyl-1,5-pentanediol-derived structural unit as repeating units.

The polyester A including the specific structural units described above can be obtained through condensation polymerization of adipic acid and 3-methyl-1,5-pentanediol without any specific limitations. This condensation polymerization can be performed in the presence of a catalyst. Moreover, the condensation polymerization can be performed using an alcohol and/or a monobasic acid as a terminal stopping component. The condensation polymerization of adipic acid and 3-methyl-1,5-pentanediol and the termination reaction of the obtained polycondensate and the terminal stopping component may be performed in one go or may be performed separately. A product that is obtained through the condensation polymerization and the termination reaction may be subjected to after-treatment such as distillation. Commonly known conditions can be adopted as reaction conditions of the condensation polymerization, such as the used amounts of the monomers, the catalyst, and the terminal stopping component described above.

Also note that a commercially available product may be used as the polyester A including the specific structural units described above.

The catalyst used in the condensation polymerization reaction is not specifically limited and may be dibutyltin oxide, tetraalkyl titanate, or the like, for example.

Examples of alcohols that can be used as the terminal stopping component include methanol, ethanol, propanol, isopropanol, butanol, isobutanol, pentanol, hexanol, isohexanol, heptanol, isoheptanol, octanol, isooctanol, 2-ethylhexanol, nonanol, isononanol, decanol, isodecanol, undecanol, isoundecanol, dodecanol, tridecanol, isotridecanol, tetradecanol, pentadecanol, hexadecanol, heptadecanol, octadecanol, cellosolve, carbitol, phenol, nonylphenol, benzyl alcohol, and mixtures thereof.

Examples of monobasic acids that can be used as the terminal stopping component include acetic acid, propionic acid, butyric acid, isobutyric acid, valeric acid, pivalic acid, caproic acid, heptanoic acid, caprylic acid, 2-ethylhexanoic acid, pelargonic acid, capric acid, undecanoic acid, lauric acid, tridecanoic acid, myristic acid, pentadecanoic acid, palmitic acid, heptadecanoic acid, stearic acid, benzoic acid, and mixtures thereof.

Of these examples, 2-ethylhexanol is preferable as the terminal stopping component.

The number-average molecular weight of the polyester A including the specific structural units described above is preferably 1,000 or more, and more preferably 2,000 or more, and is preferably 10,000 or less, and more preferably 7,000 or less.

Note that the "number-average molecular weight" can be measured by VPO (vapor pressure osmometry).

Moreover, the polyester A including the specific structural units described above preferably has an acid value of 1 or less.

Furthermore, the polyester A including the specific structural units described above preferably has a hydroxyl value of 30 or less.

The viscosity of the polyester A including the specific structural units described above is preferably 500 mPa·s or more, and more preferably 1,000 mPa·s or more, and is preferably 8,000 mPa·s or less, and more preferably 5,000 mPa·s or less.

Note that the "viscosity" can be measured in accordance with JIS Z8803 at a temperature of 23°C.

The proportional content of the (b1) polyester in the (b) plasticizer is preferably 50 mass% or more, more preferably 55 mass% or more, and even more preferably 60 mass% or more, and is preferably 95 mass% or less, and more preferably 90 mass% or less. When the proportional content of the (b1) polyester in the (b) plasticizer is not less than any of the lower limits set forth above, heat shrinkage resistance of a formed vinyl chloride resin molded product can be further increased. On the other hand, when the proportional content of the (b1) polyester in the (b) plasticizer is not more than any of the upper limits set forth above, good flexibility at low temperature of a formed vinyl chloride resin molded product can be maintained.

The content of the (b1) polyester in the vinyl chloride resin composition is preferably 30 parts by mass or more, more preferably 40 parts by mass or more, even more preferably 50 parts by mass or more, and further preferably 60 parts by mass or more relative to 100 parts by mass of the (a) vinyl chloride resin, and is preferably 120 parts by mass or less, and more preferably 110 parts by mass or less relative to 100 parts by mass of the (a) vinyl chloride resin. When the content of the (b1) polyester in the vinyl chloride resin composition is not less than any of the lower limits set forth above, heat shrinkage resistance of a formed vinyl chloride resin molded product can be further increased. On the other hand, when the content of the (b1) polyester in the vinyl chloride resin composition is not more than any of the upper limits set forth above, powder fluidity of the vinyl chloride resin composition can be improved.

### «(b2) Trimellitic acid ester»

The (b) plasticizer preferably includes (b2) a trimellitic acid ester. Through inclusion of the (b2) trimellitic acid ester in the (b) plasticizer, powder fluidity of the vinyl chloride resin composition can be increased because the (b2) trimellitic acid ester is absorbed well by the (a) vinyl chloride resin. Moreover, through inclusion of the (b2) trimellitic acid ester in the (b) plasticizer, flexibility at low temperature of a formed vinyl chloride resin molded product can be increased.

The (b2) trimellitic acid ester included in the (b) plasticizer is preferably an ester compound of trimellitic acid and a monohydric alcohol.

Specific examples of the monohydric alcohol include, but are not specifically limited to, aliphatic alcohols such as 1-hexanol, 1-heptanol, 1-octanol, 2-ethylhexanol, 1-nonanol, 1-decanol, 1-undecanol, and 1-dodecanol. Of these examples, an aliphatic alcohol having a carbon number of 6 to 18 is preferable as the monohydric alcohol, and a linear aliphatic alcohol having a carbon number of 6 to 18 is more preferable as the monohydric alcohol.

In particular, the (b2) trimellitic acid ester is preferably a triester compound in which substantially all the carboxy groups of trimellitic acid are esterified with the monohydric alcohol. Alcohol residue portions of the triester compound may all be derived from the same alcohol or may each be derived from a different alcohol.

The (b2) trimellitic acid ester may be one compound or a mixture of different compounds.

Specific examples of the (b2) trimellitic acid ester that are suitable include tri-n-hexyl trimellitate, tri-n-heptyl trimellitate, tri-n-octyl trimellitate, tri(2-ethylhexyl) trimellitate, tri-n-nonyl trimellitate, tri-n-decyl trimellitate, triisodecyl trimellitate, tri-n-undecyl trimellitate, tri-n-dodecyl trimellitate, trialkyl trimellitates (esters including two or more types of alkyl groups having different carbon numbers [with a proviso that the carbon number is 6 to 18] in a molecule), tri-n-alkyl trimellitates (esters including two or more types of alkyl groups having different carbon numbers [with a proviso that the carbon number is 6 to 18] in a molecule), and mixtures thereof.

Specific examples of the (b2) trimellitic acid ester that are more preferable include tri-n-octyl trimellitate, tri(2-ethylhexyl) trimellitate, tri-n-nonyl trimellitate, tri-n-decyl trimellitate, tri-n-alkyl trimellitates (esters including two or more types of alkyl groups having different carbon numbers [with a proviso that the carbon number is 6 to 18] in a molecule), and mixtures thereof.

The proportional content of the (b2) trimellitic acid ester in the (b) plasticizer is preferably 5 mass% or more, and more preferably 10 mass% or more, and is preferably 50 mass% or less, more preferably 45 mass% or less, and even more preferably 40 mass% or less. When the proportional content of the (b2) trimellitic acid ester in the (b) plasticizer is not less than any of the lower limits set forth above, powder fluidity of the vinyl chloride resin composition can be further increased, and flexibility at low temperature of a formed vinyl chloride resin molded product can be further increased. On the other hand, when the proportional content of the (b2) trimellitic acid ester in the (b) plasticizer is not more than any of the upper limits set forth above, heat shrinkage resistance of a formed vinyl chloride resin molded product can be increased.

The content of the (b2) trimellitic acid ester in the vinyl chloride resin composition is preferably 5 parts by mass or more relative to 100 parts by mass of the (a) vinyl chloride resin, and is preferably 80 parts by mass or less, more preferably 60 parts by mass or less, and even more preferably 50 parts by mass or less relative to 100 parts by mass of the (a) vinyl chloride resin. When the content of the (b2) trimellitic acid ester in the vinyl chloride resin composition is not less than the lower limit set forth above, powder fluidity of the vinyl chloride resin composition can be further increased, and flexibility at low temperature of a formed vinyl chloride resin molded product can be further increased. On the other hand, when the content of the (b2) trimellitic acid ester in the vinyl chloride resin composition is not more than any of the upper limits set forth above, heat shrinkage resistance of a formed vinyl chloride resin molded product can be increased.

### «(b3) Other plasticizers»

The (b) plasticizer contained in the vinyl chloride resin composition may optionally include (b3) other plasticizers besides the (b1) polyester and (b2) trimellitic acid ester described above.

Specific examples of the (b3) other plasticizers include plasticizers among those described in WO2016/098344A1 that are plasticizers other than the (b1) polyester and (b2) trimellitic acid ester described above. Of these plasticizers, epoxidized soybean oil is preferable from a viewpoint of further increasing flexibility at low temperature of a formed vinyl chloride resin molded product.

The proportional content of the (b3) other plasticizers in the (b) plasticizer is not specifically limited but is preferably not less than 0 mass% and not more than 15 mass%. When the proportional content of the (b3) other plasticizers in the (b) plasticizer is within the range set forth above, low-temperature tensile elongation after heating of a formed vinyl chloride resin molded product can be increased.

The content of the (b3) other plasticizers in the vinyl chloride resin composition is not specifically limited and can be set as not less than 0 parts by mass and not more than 15 parts by mass relative to 100 parts by mass of the (a) vinyl chloride resin.

Note that from a viewpoint of further increasing flexibility at low temperature of a formed vinyl chloride resin molded product, it is preferable to use epoxidized vegetable oil such as epoxidized soybean oil as (b3) another plasticizer in an amount of not less than 2 parts by mass and not more than 7 parts by mass relative to 100 parts by mass of the (a) vinyl chloride resin.

### <(c) Uracil compound>

The presently disclosed vinyl chloride resin composition contains (c) a uracil compound. Through inclusion of the (c) uracil compound, the presently disclosed vinyl chloride resin composition can inhibit color tone variation caused by molding temperature difference. Moreover, by using the (c) uracil compound together with the subsequently described (d) zinc acetylacetonate and (e) fatty acid metal salt in the presently disclosed vinyl chloride resin composition, it is possible to reduce brown spots at the surface of a formed vinyl chloride resin molded product.

The (c) uracil compound contained in the presently disclosed vinyl chloride resin composition is a compound that has a uracil skeleton.

Moreover, from a viewpoint of further inhibiting color tone variation caused by molding temperature difference of the vinyl chloride resin composition, the (c) uracil compound is preferably indicated by the following formula (I). 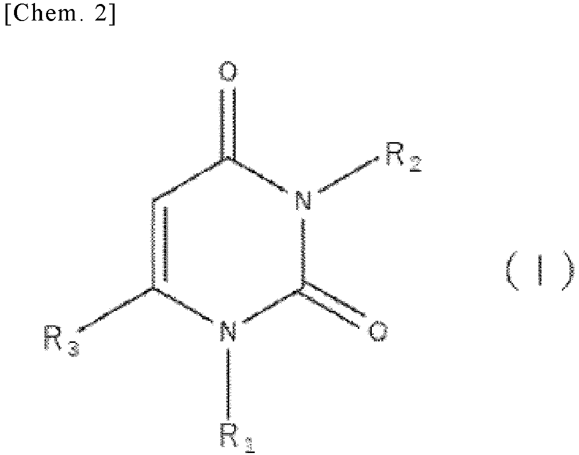 (In formula (I):
R₁ and R₂ each represent, independently of each other, a hydrogen atom or an electron donating group; and
R₃ represents a hydrogen atom or an amino group.)

From a viewpoint of further inhibiting color tone variation caused by molding temperature difference of the vinyl chloride resin composition, it is preferable that at least one of R₁ and R₂ is an electron donating group, and more preferable that both R₁ and R₂ are electron donating groups in formula (I).

In a case in which R₁ and/or R₂ in formula (I) is an electron donating group, the electron donating group may be an alkyl group, an amino group, a dialkylamino group, or the like, without any specific limitations. Of these examples, an alkyl group is preferable as an electron donating group from a viewpoint of even further inhibiting color tone variation caused by molding temperature difference of the vinyl chloride resin composition, with an alkyl group having a carbon number of 6 or less being more preferable, and a methyl group most preferable.

Note that R₁ and R₂ in formula (I) may be the same as each other or may be different from each other.

Specific examples of the (c) uracil compound indicated by formula (I) include uracil, 6-amino-1,3-dimethyluracil, 6-amino-1,3-diethyluracil, 6-amino-1,3-di-n-propyluracil, 6-amino-1,3-di-n-butyluracil, 6-amino-1,3-di-n-pentyluracil, and 6-amino-1,3-di-n-hexyluracil. Of these examples, 6-amino-1,3-dimethyluracil is preferable as the (c) uracil compound from a viewpoint of even further inhibiting color tone variation caused by molding temperature difference of the vinyl chloride resin composition. Note that one of these (c) uracil compounds may be used individually, or two or more of these (c) uracil compounds may be used as a mixture in a freely selected ratio.

The content of the (c) uracil compound in the vinyl chloride resin composition is preferably 0.05 parts by mass or more, more preferably 0.10 parts by mass or more, even more preferably 0.15 parts by mass or more, further preferably 0.20 parts by mass or more, even further preferably 0.25 parts by mass or more, and particularly preferably 0.40 parts by mass or more relative to 100 parts by mass of the (a) vinyl chloride resin, and is preferably 3.00 parts by mass or less, more preferably 2.00 parts by mass or less, even more preferably 1.60 parts by mass or less, further preferably 1.20 parts by mass or less, and even further preferably 0.80 parts by mass or less relative to 100 parts by mass of the (a) vinyl chloride resin. When the content of the (c) uracil compound in the vinyl chloride resin composition is not less than any of the lower limits set forth above, color tone variation caused by molding temperature difference of the vinyl chloride resin composition can be further inhibited, and brown spots at the surface of a formed vinyl chloride resin molded product can be further reduced. On the other hand, when the content of the (c) uracil compound in the vinyl chloride resin composition is not more than any of the upper limits set forth above, powder fluidity of the vinyl chloride resin composition and blooming resistance of a formed vinyl chloride resin molded product can be improved.

### <(d) Zinc acetylacetonate>

The presently disclosed vinyl chloride resin composition contains (d) zinc acetylacetonate. Through inclusion of the (d) zinc acetylacetonate, the presently disclosed vinyl chloride resin composition can inhibit color tone variation caused by molding temperature difference.

The content of the (d) zinc acetylacetonate in the vinyl chloride resin composition is preferably 0.05 parts by mass or more, more preferably 0.10 parts by mass or more, even more preferably 0.15 parts by mass or more, further preferably 0.25 parts by mass or more, and even further preferably 0.35 parts by mass or more relative to 100 parts by mass of the (a) vinyl chloride resin, and is preferably 2.0 parts by mass or less, more preferably 1.5 parts by mass or less, even more preferably 0.8 parts by mass or less, and further preferably 0.50 parts by mass or less relative to 100 parts by mass of the (a) vinyl chloride resin. When the content of the (d) zinc acetylacetonate in the vinyl chloride resin composition is not less than any of the lower limits set forth above, color tone variation caused by molding temperature difference of the vinyl chloride resin composition can be further inhibited. On the other hand, when the content of the (d) zinc acetylacetonate in the vinyl chloride resin composition is not more than any of the upper limits set forth above, brown spots at the surface of a formed vinyl chloride resin molded product can be further reduced.

The content of the (d) zinc acetylacetonate in the vinyl chloride resin composition, by mass, is required to be not less than 0.5 times the content of the (c) uracil compound, is preferably not less than 0.6 times, more preferably not less than 0.7 times, and even more preferably not less than 0.8 times the content of the (c) uracil compound, and is preferably not more than 3 times, more preferably not more than 2 times, even more preferably not more than 1.5 times, further preferably not more than 1.2 times, even further preferably not more than 1.0 times, and particularly preferably not more than 0.9 times the content of the (c) uracil compound. When the ratio of the content of the (d) zinc acetylacetonate relative to the content of the (c) uracil compound in the vinyl chloride resin composition is not less than any of the lower limits set forth above, color tone variation caused by molding temperature difference of the vinyl chloride resin composition can be inhibited. On the other hand, when the ratio of the content of the (d) zinc acetylacetonate relative to the content of the (c) uracil compound in the vinyl chloride resin composition is not more than any of the upper limits set forth above, brown spots at the surface of a formed vinyl chloride resin molded product can be further reduced.

### <(e) Fatty acid metal salt (other than fatty acid zinc salt)>

The presently disclosed vinyl chloride resin composition contains (e) a fatty acid metal salt. The (e) fatty acid metal salt is a salt of a metal other than zinc with a fatty acid. Through inclusion of the (e) fatty acid metal salt other than a fatty acid zinc salt, the presently disclosed vinyl chloride resin composition can inhibit color tone variation caused by molding temperature difference. Moreover, through inclusion of the (e) fatty acid metal salt other than a fatty acid zinc salt, the presently disclosed vinyl chloride resin composition can reduce brown spots at the surface of a formed vinyl chloride resin molded product.

Although it is not clear why brown spots at the surface of a formed vinyl chloride resin molded product can be reduced through inclusion of the (e) fatty acid metal salt other than a fatty acid zinc salt in the presently disclosed vinyl chloride resin composition, the reason for this is presumed to be as follows. Hydrogen chloride formed through thermal decomposition of the (a) vinyl chloride resin during molding of the vinyl chloride resin composition is thought to react with the (d) zinc acetylacetonate to thereby produce zinc chloride. Zinc chloride can act as a major cause of the formation of brown spots at the surface of a formed vinyl chloride resin molded product through a phenomenon referred to as "zinc burning". In contrast, the formation of brown spots through the phenomenon of zinc burning is thought to be inhibited by the (e) fatty acid metal salt other than a fatty acid zinc salt reacting with zinc chloride.

The carbon number of the fatty acid of the (e) fatty acid metal salt is not specifically limited but is preferably 6 or more, more preferably 8 or more, and more preferably 10 or more, and is preferably 22 or less, more preferably 21 or less, even more preferably 20 or less, and further preferably 18 or less. When a metal salt of a fatty acid having a carbon number that is within any of the specific ranges set forth above is used as the (e) fatty acid metal salt, color tone variation caused by molding temperature difference of the vinyl chloride resin composition can be further inhibited, and brown spots at the surface of a formed vinyl chloride resin molded product can be further reduced.

Moreover, the fatty acid of the (e) fatty acid metal salt is particularly preferably stearic acid from a viewpoint of even further inhibiting color tone variation caused by molding temperature difference of the vinyl chloride resin composition while also even further reducing brown spots at the surface of a formed vinyl chloride resin molded product.

The metal of the (e) fatty acid metal salt is not specifically limited so long as it is a metal other than zinc, but is preferably calcium or barium, and more preferably calcium. When either or both of a fatty acid calcium salt and a fatty acid barium salt are used as the (e) fatty acid metal salt, color tone variation caused by molding temperature difference of the vinyl chloride resin composition can be further inhibited, and brown spots at the surface of a formed vinyl chloride resin molded product can be further reduced.

Note that the (e) fatty acid metal salt may be one fatty acid metal salt used individually or may be two or more fatty acid metal salts used as a mixture in a freely selected ratio.

The content of the (e) fatty acid metal salt in the vinyl chloride resin composition is preferably 0.10 parts by mass or more, more preferably 0.20 parts by mass or more, even more preferably 0.40 parts by mass or more, further preferably 0.50 parts by mass or more, even further preferably 0.60 parts by mass or more, and particularly preferably 0.70 parts by mass or more relative to 100 parts by mass of the (a) vinyl chloride resin, and is preferably 4.0 parts by mass or less, more preferably 3.0 parts by mass or less, even more preferably 2.0 parts by mass or less, further preferably 1.0 parts by mass or less, and particularly preferably 0.86 parts by mass or less relative to 100 parts by mass of the (a) vinyl chloride resin. When the content of the (e) fatty acid metal salt in the vinyl chloride resin composition is not less than any of the lower limits set forth above, color tone variation caused by molding temperature difference of the vinyl chloride resin composition can be further inhibited, and brown spots at the surface of a formed vinyl chloride resin molded product can be further reduced. On the other hand, when the content of the (e) fatty acid metal salt in the vinyl chloride resin composition is not more than any of the upper limits set forth above, blooming resistance of a formed vinyl chloride resin molded product can be improved.

The content of the (e) fatty acid metal salt in the vinyl chloride resin composition, by mass, is required to be not less than 1.6 times the content of the (d) zinc acetylacetonate, is preferably not less than 1.7 times, more preferably not less than 1.8 times, even more preferably not less than 1.9 times, and even more preferably not less than 2 times the content of the (d) zinc acetylacetonate, and is preferably not more than 6 times, more preferably not more than 5 times, even more preferably not more than 4 times, further preferably not more than 3 times, even further preferably not more than 2.4 times, and particularly preferably not more than 2.3 times the content of the (d) zinc acetylacetonate. When the ratio of the content of the (e) fatty acid metal salt relative to the content of the (d) zinc acetylacetonate in the vinyl chloride resin composition is not less than any of the lower limits set forth above, color tone variation caused by molding temperature difference of the vinyl chloride resin composition can be inhibited, and brown spots at the surface of a formed vinyl chloride resin molded product can be reduced. On the other hand, when the ratio of the content of the (e) fatty acid metal salt relative to the content of the (d) zinc acetylacetonate in the vinyl chloride resin composition is not more than any of the upper limits set forth above, color tone variation caused by molding temperature difference of the vinyl chloride resin composition can be further inhibited, and blooming resistance of a formed vinyl chloride resin molded product can be improved.

### <(f) Other β-diketone>

The presently disclosed vinyl chloride resin composition preferably further contains a β-diketone other than the above-described (d) zinc acetylacetonate (i.e., (f) another β-diketone). When (f) another β-diketone is also used in addition to the above-described (d) zinc acetylacetonate, color tone variation caused by molding temperature difference of the vinyl chloride resin composition can be further inhibited.

The (f) other β-diketone may be acetylacetone; a salt of a metal other than zinc with acetylacetone such as calcium acetylacetonate, magnesium acetylacetonate, lithium acetylacetonate, aluminum acetylacetonate, or nickel acetylacetonate; a β-diketone compound other than acetylacetone or a metal salt thereof; or the like, for example. Note that the metal salt of a β-diketone compound other than acetylacetone is a metal complex formed through a conjugate base of the β-diketone compound other than acetylacetone bonding to a metal ion.

From a viewpoint of even further inhibiting color tone variation caused by molding temperature difference of the vinyl chloride resin composition, it is preferable to use a β-diketone compound that includes a benzoyl group such as dibenzoylmethane, stearoylbenzoylmethane, or palmitoylbenzoylmethane as the (f) other β-diketone, and more preferable to use stearoylbenzoylmethane as the (f) other β-diketone.

The content of the (f) other β-diketone in the vinyl chloride resin composition is preferably 0.40 parts by mass or more, more preferably 0.50 parts by mass or more, and even more preferably 0.60 parts by mass or more relative to 100 parts by mass of the (a) vinyl chloride resin, and is preferably 2.00 parts by mass or less, more preferably 1.50 parts by mass or less, and even more preferably 1.20 parts by mass or less relative to 100 parts by mass of the (a) vinyl chloride resin. When the content of the (f) other β-diketone in the vinyl chloride resin composition is within any of the specific ranges set forth above, color tone variation caused by molding temperature difference of the vinyl chloride resin composition can be even further inhibited.

A mass ratio of the (f) other β-diketone relative to the (c) uracil compound ((f) other β-diketone/(c) uracil compound) in the vinyl chloride resin composition is preferably 2/15 or more, more preferably 2/5 or more, even more preferably 1/1 or more, and further preferably 4/3 or more, and is preferably 40/1 or less, more preferably 20/1 or less, even more preferably 5/1 or less, and further preferably 3/1 or less. When the mass ratio of the (f) other β-diketone relative to the (c) uracil compound ((f) other β-diketone/(c) uracil compound) in the vinyl chloride resin composition is within any of the specific ranges set forth above, color tone variation caused by molding temperature difference of the vinyl chloride resin composition can be even further inhibited.

A mass ratio of the (d) zinc acetylacetonate relative to the (f) other β-diketone ((d) zinc acetylacetonate/(f) other β-diketone) in the vinyl chloride resin composition is preferably 1/10 or more, more preferably 1/5 or more, even more preferably 3/10 or more, and further preferably 2/5 or more, and is preferably 3/1 or less, more preferably 3/2 or less, and even more preferably 3/5 or less. When the mass ratio of the (d) zinc acetylacetonate relative to the (f) other β-diketone ((d) zinc acetylacetonate/(f) other β-diketone) in the vinyl chloride resin composition is within any of the specific ranges set forth above, color tone variation caused by molding temperature difference of the vinyl chloride resin composition can be even further inhibited. Note that the mass ratio of the (d) zinc acetylacetonate relative to the (f) other β-diketone ((d) zinc acetylacetonate/(f) other β-diketone) in the vinyl chloride resin composition may be 1/2 or more, or may be 1/2 or less.

### <(g) Fatty acid zinc salt>

The presently disclosed vinyl chloride resin composition preferably further contains (g) a fatty acid zinc salt in addition to the (e) fatty acid metal salt other than a fatty acid zinc salt. Through further inclusion of the (g) fatty acid zinc salt in the presently disclosed vinyl chloride resin composition, color tone variation caused by molding temperature difference can be further inhibited.

The carbon number of the fatty acid of the (g) fatty acid zinc salt is not specifically limited, but is preferably 6 or more, more preferably 8 or more, and more preferably 10 or more, and is preferably 22 or less, more preferably 21 or less, and even more preferably 20 or less. When a zinc salt of a fatty acid having a carbon number that is within any of the specific ranges set forth above is used as the (g) fatty acid zinc salt, color tone variation caused by molding temperature difference of the vinyl chloride resin composition can be even further inhibited.

Moreover, it is particularly preferable that zinc stearate is used as the (g) fatty acid zinc salt from a viewpoint of even further inhibiting color tone variation caused by molding temperature difference of the vinyl chloride resin composition.

Note that the (g) fatty acid zinc salt may be one fatty acid zinc salt used individually or may be two or more fatty acid zinc salts used as a mixture in a freely selected ratio.

The content of the (g) fatty acid zinc salt in the vinyl chloride resin composition is preferably 0.05 parts by mass or more, more preferably 0.10 parts by mass or more, and even more preferably 0.15 parts by mass or more relative to 100 parts by mass of the (a) vinyl chloride resin, and is preferably 4.0 parts by mass or less, more preferably 3.0 parts by mass or less, even more preferably 2.0 parts by mass or less, and further preferably 1.0 parts by mass or less relative to 100 parts by mass of the (a) vinyl chloride resin. When the content of the (g) fatty acid zinc salt in the vinyl chloride resin composition is not less than any of the lower limits set forth above, color tone variation caused by molding temperature difference of the vinyl chloride resin composition can be even further inhibited. On the other hand, when the content of the (g) fatty acid zinc salt in the vinyl chloride resin composition is not more than any of the upper limits set forth above, brown spots at the surface of a formed vinyl chloride resin molded product can be further reduced.

A mass ratio of the (e) fatty acid metal salt other than a fatty acid zinc salt relative to the (g) fatty acid zinc salt ((e) fatty acid metal salt/(g) fatty acid zinc salt) in the vinyl chloride resin composition is preferably 2/1 or more, more preferably 5/2 or more, even more preferably 3/1 or more, further preferably 4/1 or more, and even further preferably 5/1 or more, and is preferably 20/1 or less, more preferably 15/1 or less, and even more preferably 10/1 or less. When the mass ratio of the (e) fatty acid metal salt other than a fatty acid zinc salt relative to the (g) fatty acid zinc salt ((e) fatty acid metal salt/(g) fatty acid zinc salt) in the vinyl chloride resin composition is within any of the specific ranges set forth above, color tone variation caused by molding temperature difference of the vinyl chloride resin composition can be even further inhibited, and brown spots at the surface of a formed vinyl chloride resin molded product can be further reduced.

### <Additives>

The presently disclosed vinyl chloride resin composition may further contain various additives besides the components set forth above. Examples of additives that may be used include, but are not specifically limited to, lubricants; stabilizers such as perchloric acid-treated hydrotalcite and zeolites; mold release agents; dusting agents other than the previously described vinyl chloride resin fine particles; impact modifiers; perchloric acid compounds other than perchloric acid-treated hydrotalcite (sodium perchlorate, potassium perchlorate, etc.); antioxidants; fungicides; flame retardants; antistatic agents; fillers; light stabilizers; foaming agents; and pigments.

Additives that are described in WO2016/098344A1, for example, can be used as the aforementioned additives that can be contained in the presently disclosed vinyl chloride resin composition, and suitable amounts thereof can also be the same as described in WO2016/098344A1.

The presently disclosed vinyl chloride resin composition may contain silicone oil.

Note that the silicone oil that can be contained in the vinyl chloride resin composition may be silicone oil such as described in JP2018-35304A, for example.

The content of the silicone oil in the vinyl chloride resin composition is not specifically limited but is preferably 0.1 parts by mass or more, and more preferably 0.2 parts by mass or more relative to 100 parts by mass of the (a) vinyl chloride resin, and is preferably 1 part by mass or less, and more preferably 0.8 parts by mass or less relative to 100 parts by mass of the (a) vinyl chloride resin.

### <Production method of vinyl chloride resin composition>

The presently disclosed vinyl chloride resin composition can be produced by mixing the components described above.

Although no specific limitations are placed on the mixing method of the (a) vinyl chloride resin, (b) plasticizer, (c) uracil compound, (d) zinc acetylacetonate, and (e) fatty acid metal salt, and also the (f) other β-diketone, (g) fatty acid zinc salt, and various additives that are further compounded as necessary, a method in which components other than a dusting agent (inclusive of vinyl chloride resin fine particles) are mixed by dry blending and then the dusting agent is subsequently added and mixed therewith, for example, may be adopted. The dry blending is preferably carried out using a Henschel mixer. Although the temperature during dry blending is not specifically limited, the temperature is preferably 50°C or higher, and more preferably 70°C or higher, and is preferably 200°C or lower.

### <Use of vinyl chloride resin composition>

The obtained vinyl chloride resin composition can suitably be used in powder molding, and can more suitably be used in powder slush molding.

### (Vinyl chloride resin molded product)

A feature of the presently disclosed vinyl chloride resin molded product is that it is obtained by molding the vinyl chloride resin composition set forth above by any method. As a result of the presently disclosed vinyl chloride resin molded product being formed using the vinyl chloride resin composition set forth above, the presently disclosed vinyl chloride resin molded product normally contains at least the (a) vinyl chloride resin, (b) plasticizer, (c) uracil compound, (d) zinc acetylacetonate, and (e) fatty acid metal salt other than a fatty acid zinc salt, wherein a ratio of the content of the (d) zinc acetylacetonate relative to the content of the (c) uracil compound is not less than a specific value, and a ratio of the content of the (e) fatty acid metal salt relative to the content of the (d) zinc acetylacetonate is not less than a specific value. Moreover, the presently disclosed vinyl chloride resin molded product has reduced color tone unevenness, few brown spots, and excellent external appearance.

Furthermore, the presently disclosed vinyl chloride resin molded product can inhibit the occurrence of discoloration such as yellowing even in a situation in which the vinyl chloride resin molded product is heated to a high temperature of 270°C or higher, for example.

Therefore, the presently disclosed vinyl chloride resin molded product can suitably be used as an automobile interior material such as a surface skin of an automobile instrument panel.

### <Formation method of vinyl chloride resin molded product>

Although no specific limitations are placed on the mold temperature in powder slush molding in a situation in which the vinyl chloride resin molded product is formed by powder slush molding, the mold temperature is preferably 200°C or higher, and more preferably 220°C or higher, and is preferably 300°C or lower, and more preferably 280°C or lower.

Note that even in a situation in which there is a temperature distribution in the mold during powder slush molding, for example, color tone unevenness of the presently disclosed vinyl chloride resin molded product that is formed is reduced as a result of the presently disclosed vinyl chloride resin composition set forth above being used in molding.

The following method, for example, may be used in production of the vinyl chloride resin molded product without any specific limitations. In this method, the presently disclosed vinyl chloride resin composition is sprinkled onto a mold having a temperature within any of the ranges set forth above. The vinyl chloride resin composition is initially left for not less than 5 seconds and not more than 30 seconds and, after shaking off any excess vinyl chloride resin composition, is then further left for not less than 30 seconds and not more than 3 minutes at an arbitrary temperature. The mold is subsequently cooled to a temperature of not lower than 10°C and not higher than 60°C, and the presently disclosed vinyl chloride resin molded product that is obtained is removed from the mold. A sheet-shaped molded product that imitates the shape of the mold is obtained.

### (Laminate)

The presently disclosed laminate includes a foamed polyurethane molded product and the vinyl chloride resin molded product set forth above. The vinyl chloride resin molded product typically constitutes one surface of the laminate.

As a result of the presently disclosed laminate including a vinyl chloride resin molded product that is formed using the presently disclosed vinyl chloride resin composition, that has reduced color tone unevenness, and that has few brown spots and excellent external appearance, the presently disclosed laminate can suitably be used as an automobile interior material forming an automobile interior component (particularly an automobile instrument panel), for example.

Moreover, the presently disclosed laminate can inhibit the occurrence of discoloration such as yellowing of the vinyl chloride resin molded product part thereof even in a situation in which the laminate is heated to a high temperature of 270°C or higher, for example.

The method by which the foamed polyurethane molded product and the vinyl chloride resin molded product are stacked is not specifically limited and may, for example, be a method such as described below. Specifically, (1) a method in which the foamed polyurethane molded product and the vinyl chloride resin molded product are separately prepared and are subsequently adhered to one another by thermal fusion bonding, thermal adhesion, or using a commonly known adhesive, or (2) a method in which raw materials of the foamed polyurethane molded product such as an isocyanate and a polyol are caused to react and polymerize on the vinyl chloride resin molded product while carrying out polyurethane foaming by a commonly known method to directly form the foamed polyurethane molded product on the vinyl chloride resin molded product may be adopted. The latter method (2) is more suitable because it involves a simple process and enables laminates of various different shapes to be obtained while easily achieving strong adhesion of the vinyl chloride resin molded product and the foamed polyurethane molded product.

### EXAMPLES

The following provides a more specific description of the present disclosure based on examples. However, the present disclosure is not limited to the following examples. In the following description, "%" and "parts" used in expressing quantities are by mass, unless otherwise specified.

The following methods were used to measure and evaluate color tone variation caused by molding temperature difference of a vinyl chloride resin composition and external appearance (brown spots) of a vinyl chloride resin molded product.

### <Color tone variation caused by molding temperature difference>

A vinyl chloride resin composition obtained in each example or comparative example was sprinkled onto a textured mold that was heated to a temperature of 230°C, and, after being left to melt for an arbitrary time, excess vinyl chloride resin composition was shaken off. Thereafter, the textured mold onto which the vinyl chloride resin composition had been sprinkled was placed at rest in an oven set to a temperature of 200°C, and, once 60 seconds had passed after being placed at rest, the textured mold was cooled with cooling water. Once the mold temperature had dropped to 40°C, a 150 mm × 200 mm × 1 mm vinyl chloride resin molded sheet was removed from the mold as a vinyl chloride resin molded product.

Molding was also performed by the same operations as described above with the exception that the temperature of the mold was raised from 230°C to 270°C.

The color tone of vinyl chloride resin molded sheets obtained through molding at mold temperatures of 230°C and 270°C was measured using a spectrophotometer (CM-700d produced by Konica Minolta, Inc.). Note that measurement was performed for a total of 9 points that were central points of 9 squares obtained by dividing up a textured surface of the vinyl chloride resin molded sheet, and an average value of a b* value was determined. The average value of the b* value for the mold temperature of 230°C was subtracted from the average value of the b* value for the mold temperature of 270°C so as to calculate a Δb* value. A smaller Δb* value indicates that color tone variation caused by molding temperature difference is inhibited with the vinyl chloride resin composition.

### <External appearance (brown spots)>

With respect to a vinyl chloride resin molded sheet (vinyl chloride resin molded product) that was obtained in a situation in which a vinyl chloride resin composition was molded with a mold temperature of 270°C in the evaluation method of color tone variation caused by molding temperature difference described above, a textured surface of the vinyl chloride resin molded sheet was visually inspected in order to judge whether or not brown spots were present. When brown spots are not present at the surface of a vinyl chloride resin molded product, this vinyl chloride resin molded product can be considered to have excellent external appearance.

### (Production example)

A polyester used in the examples and comparative examples was produced as follows.

### <Polyester A>

Adipic acid as a polybasic carboxylic acid, 3-methyl-1,5-pentanediol as a polyhydric alcohol, and 2-ethylhexanol as a stopper (terminal stopping component) were charged to a reactor, tetraisopropyl titanate was added as a catalyst, solvent was added as appropriate, and heating thereof was performed under stirring. Water produced as a by-product was removed at normal pressure and at reduced pressure, and the temperature was finally raised to 220°C to 230°C to complete a dehydration condensation reaction. The obtained product was then subjected to thin-film evaporation under conditions of a pressure of 4 Pa to 80 Pa and a jacket temperature of 250°C to yield a polyester A (viscosity: 3,600 mPa·s; number-average molecular weight: 5,300; acid value: 0.32; hydroxyl value: 12.7) including 2-ethylhexoxy groups at the terminals thereof.

### (Example 1)

### <Production of vinyl chloride resin composition>

With the exception of plasticizers (trimellitic acid ester, polyester A, and epoxidized soybean oil) and vinyl chloride resin fine particles used as a dusting agent, components indicated in Table 1 were loaded into and mixed in a Henschel mixer. At the point at which the temperature of the mixture rose to 80°C, all of the plasticizers were added, and drying up of the mixture was caused to occur (i.e., the mixture changed to a dry state through absorption of the plasticizers by vinyl chloride resin particles used as a vinyl chloride resin). Thereafter, once the dried-up mixture had cooled to a temperature of 70°C or lower, the vinyl chloride resin fine particles used as the dusting agent were added to the mixture to produce a vinyl chloride resin composition.

The obtained vinyl chloride resin composition was used to evaluate color tone variation caused by molding temperature difference and external appearance (brown spots) of a vinyl chloride resin molded product. The results are shown in Table 1.

### (Example 2)

A vinyl chloride resin composition was produced in the same way as in Example 1 with the exception that the used amount of calcium stearate was changed as indicated in Table 1. Moreover, the obtained vinyl chloride resin composition was used to evaluate color tone variation caused by molding temperature difference and external appearance (brown spots) of a vinyl chloride resin molded product. The results are shown in Table 1.

### (Example 3)

A vinyl chloride resin composition was produced in the same way as in Example 2 with the exception that zinc stearate was not used. Moreover, the obtained vinyl chloride resin composition was used to evaluate color tone variation caused by molding temperature difference and external appearance (brown spots) of a vinyl chloride resin molded product. The results are shown in Table 1.

### (Example 4)

A vinyl chloride resin composition was produced in the same way as in Example 2 with the exception that barium stearate was used instead of calcium stearate. Moreover, the obtained vinyl chloride resin composition was used to evaluate color tone variation caused by molding temperature difference and external appearance (brown spots) of a vinyl chloride resin molded product. The results are shown in Table 1.

### (Example 5)

A vinyl chloride resin composition was produced in the same way as in Example 1 with the exception that the used amounts of zinc acetylacetonate and calcium stearate were changed as indicated in Table 1. Moreover, the obtained vinyl chloride resin composition was used to evaluate color tone variation caused by molding temperature difference and external appearance (brown spots) of a vinyl chloride resin molded product. The results are shown in Table 1.

### (Example 6)

A vinyl chloride resin composition was produced in the same way as in Example 1 with the exception that the used amounts of 6-amino-1,3-dimethyluracil, zinc acetylacetonate, and calcium stearate were changed as indicated in Table 1. Moreover, the obtained vinyl chloride resin composition was used to evaluate color tone variation caused by molding temperature difference and external appearance (brown spots) of a vinyl chloride resin molded product. The results are shown in Table 1.

### (Comparative Example 1)

A vinyl chloride resin composition was produced in the same way as in Example 1 with the exception that 6-amino-1,3-dimethyluracil, zinc acetylacetonate, and calcium stearate were not used. Moreover, the obtained vinyl chloride resin composition was used to evaluate color tone variation caused by molding temperature difference and external appearance (brown spots) of a vinyl chloride resin molded product. The results are shown in Table 1.

### (Comparative Example 2)

A vinyl chloride resin composition was produced in the same way as in Example 1 with the exception that zinc acetylacetonate and calcium stearate were not used. Moreover, the obtained vinyl chloride resin composition was used to evaluate color tone variation caused by molding temperature difference and external appearance (brown spots) of a vinyl chloride resin molded product. The results are shown in Table 1.

### (Comparative Examples 3 to 5)

A vinyl chloride resin composition was produced in the same way as in Example 1 with the exception that the used amount of zinc acetylacetonate and/or calcium stearate was changed as indicated in Table 1. Moreover, the obtained vinyl chloride resin composition was used to evaluate color tone variation caused by molding temperature difference and external appearance (brown spots) of a vinyl chloride resin molded product. The results are shown in Table 1.

### (Comparative Example 6)

A vinyl chloride resin composition was produced in the same way as in Example 2 with the exception that 6-amino-1,3-dimethyluracil was not used. Moreover, the obtained vinyl chloride resin composition was used to evaluate color tone variation caused by molding temperature difference and external appearance (brown spots) of a vinyl chloride resin molded product. The results are shown in Table 1.

**[Table 1]**

| | | | Comparative Example 1 | Comparative Example 2 | Comparative Example 3 | Comparative Example 4 | Comparative Example 5 | Comparative Example 6 | Exanple 1 | Example 2 | Example 3 | Example 4 | Example 5 | Example 6 |
|---|---|---|---|---|---|---|---|---|---|---|---|---|---|---|
| | Vinyl chloride resin | Vinyl chloride resin particles⁽¹⁾ [parts by mass] | 100 | 100 | 100 | 100 | 100 | 100 | 100 | 100 | 100 | 100 | 100 | 100 |
| | | Vinyl chloride resin fine particles⁽²⁾ [parts by mass] | 16 | 16 | 16 | 16 | 16 | 16 | 16 | 16 | 16 | 16 | 16 | 16 |
| | Plasticizer | Trimellitic acid ester⁽³⁾ [parts by mass] | 30 | 30 | 30 | 30 | 30 | 30 | 30 | 30 | 30 | 30 | 30 | 30 |
| | | Polyester plasticizer A [parts by mass] | 80 | 80 | 80 | 80 | 80 | 80 | 80 | 80 | 80 | 80 | 80 | 80 |
| | | Other plasticizer (epoxidized soybean oil⁽⁴⁾) [parts by mass] | 5 | 5 | 5 | 5 | 5 | 5 | 5 | 5 | 5 | 5 | 5 | 5 |
| | Stabilizer | Perchloric acid-substituted hydrotalcite⁽⁵⁾ [parts by mass] | 4.5 | 4.5 | 4.5 | 4.5 | 4.5 | 4.5 | 4.5 | 4.5 | 4.5 | 4.5 | 4.5 | 4.5 |
| | | Zeolite⁽⁶⁾ [parts by mass] | 2.4 | 2.4 | 2.4 | 2.4 | 2.4 | 2.4 | 2.4 | 2.4 | 2.4 | 2.4 | 2.4 | 2.4 |
| | | Stearoylbenzoylmethane⁽⁷⁾ [parts by mass] | 1 | 1 | 1 | 1 | 1 | 1 | 1 | 1 | 1 | 1 | 1 | 1 |
| Formulation | | Hindered amine light stabilizer⁽⁸⁾ [parts by mass] | 0.2 | 0.2 | 0.2 | 0.2 | 0.2 | 0.2 | 0.2 | 0.2 | 0.2 | 0.2 | 0.2 | 0.2 |
| | | Zinc stearate⁽⁹⁾ parts by mass] | 0.2 | 0.2 | 0.2 | 0.2 | 0.2 | 0.2 | 0.2 | 0.2 | - | 0.2 | 0.2 | 0.2 |
| | | 12-Hydroxystearic acid⁽¹⁰⁾ [parts by mass] | 0.2 | 0.2 | 0.2 | 0.2 | 0.2 | 0.2 | 0.2 | 0.2 | 0.2 | 0.2 | 0.2 | 0.2 |
| | Uracil compound | 6-Amino-1,3-dimethyluracil [parts by mass] | - | 0.3 | 0.3 | 0.3 | 0.3 | - | 0.3 | 0.3 | 0.3 | 0.3 | 0.3 | 0.6 |
| | Zinc acetylacetonate | Zinc acetylacetonate [parts by mass] | - | - | 0.1 | 0.2 | 1.0 | 0.2 | 0.2 | 0.2 | 0.2 | 0.2 | 0.3 | 0.5 |
| | Fatty acid metal salt (excluding fatty acid zinc salt) | Calcium stearate [parts by mass] | - | - | 0.1 | 0.2 | 0.6 | 0.5 | 0.4 | 0.5 | 0.5 | - | 0.7 | 1.0 |
| | | Barium stearate [parts by mass] | - | - | - | - | - | - | - | - | - | 0.5 | - | - |
| | Silicone oil | Unmodified silicone oil⁽¹¹⁾ [parts by mass] | 0.4 | 0.4 | 0.4 | 0.4 | 0.4 | 0.4 | 0.4 | 0.4 | 0.4 | 0.4 | 0.4 | 0.4 |
| | Pigment | White⁽¹²⁾ parts by mass] | 4 | 4 | 4 | 4 | 4 | 4 | 4 | 4 | 4 | 4 | 4 | 4 |
| | | Yellow⁽¹³⁾ [parts by mass] | 1 | 1 | 1 | 1 | 1 | 1 | 1 | 1 | 1 | 1 | 1 | 1 |
| Content relative to 100 parts by mass of vinyl chloride resin | | Uracil compound [parts by mass] | - | 0.26 | 0.26 | 0.26 | 0.26 | - | 0.26 | 0.26 | 0.26 | 0.26 | 0.26 | 0.52 |
| | | Zinc acetylacetonate [parts by mass] | - | - | 0.09 | 0.17 | 0.86 | 0.17 | 0.17 | 0.17 | 0.17 | 0.17 | 0.26 | 0.43 |
| | | Fatty acid metal salt (excluding fatty acid zinc salt) [parts by mass] | - | - | 0.09 | 0.17 | 0.52 | 0.43 | 0.34 | 0.43 | 0.43 | 0.43 | 0.60 | 0.86 |
| Ratio of content of zinc acetylacetonate relative to content of uracil compound [times] | | | - | - | 0.33 | 0.67 | 3.33 | - | 0.67 | 0.67 | 0.67 | 0.67 | 1.00 | 0.83 |
| Ratio of content of fatty acid metal salt (excktding fatty acid zinc salt) relative to content of zinc acetylacetonate [times] | | | - | - | 1.00 | 1.00 | 0.60 | 2.50 | 2.00 | 2.50 | 2.50 | 2.50 | 2.33 | 2.00 |
| Evaluation | | Color tone variation caused by molding temperature difference (Δb*) | 6.7 | 4.1 | 4.0 | 2.1 | 10.6 | 4.2 | 2.0 | 1.6 | 1.9 | 2.0 | 1.4 | 1.0 |
| | | Presence of brown spots | No | No | Yes | Yes | Yes | Yes | No | No | No | No | No | No |

(1) Product name: ZEST^{®} (ZEST is a registered trademark in Japan, other countries, or both) 1700ZI (produced by suspension polymerization; average degree of polymerization: 1,700; average particle diameter: 130 µm); produced by Shin Dai-ichi Vinyl Corporation
(2) Product name: ZEST PQLTX (produced by emulsion polymerization; average degree of polymerization: 800; average particle diameter: 1.8 µm); produced by Shin Dai-ichi Vinyl Corporation
(3) Product name: TRIMEX N-08; produced by Kao Corporation
(4) Product name: ADK CIZER O-130S; produced by Adeka Corporation
(5) Product name: ALCAMIZER^{®} (ALCAMIZER is a registered trademark in Japan, other countries, or both) 5; produced by Kyowa Chemical Industry Co., Ltd.
(6) Product name: MIZUKALIZER DS; produced by Mizusawa Industrial Chemicals, Ltd.
(7) Product name: Karenz DK-1; produced by Showa Denko K.K.
(8) Product name: ADK STAB LA-63P; produced by Adeka Corporation
(9) Product name: SAKAI SZ2000; produced by Sakai Chemical Industry Co., Ltd.
(10) Product name: ADK STAB LS-12; produced by Adeka Corporation
(11) Product name: KF-96H-300,000cs (unmodified silicone oil (polydimethylsiloxane); viscosity: 30 × 10⁴ cs); produced by Shin-Etsu Silicone
(12) Product name: DAP-1050 White; produced by Dainichiseika Color and Chemicals Mfg. Co., Ltd.
(13) Product name: DA PX-1446 Yellow; produced by Dainichiseika Color and Chemicals Mfg. Co., Ltd.

It can be seen from Table 1 that color tone variation caused by molding temperature difference is inhibited and a vinyl chloride resin molded product having few brown spots can be formed with a vinyl chloride resin composition that contains a vinyl chloride resin, a plasticizer, a uracil compound, zinc acetylacetonate, and a fatty acid metal salt other than a fatty acid zinc salt and in which a ratio of the content of the zinc acetylacetonate relative to the content of the uracil compound is not less than a specific value and a ratio of the content of the fatty acid metal salt other than a fatty acid zinc salt relative to the content of the zinc acetylacetonate is not less than a specific value.

In contrast, it can be seen that color tone variation caused by molding temperature difference cannot be sufficiently inhibited with the vinyl chloride resin composition of Comparative Example 1, which does not contain a uracil compound, zinc acetylacetonate, and a fatty acid metal salt other than a fatty acid zinc salt.

Moreover, it can be seen that color tone variation caused by molding temperature difference cannot be sufficiently inhibited even with the vinyl chloride resin composition of Comparative Example 2, which contains a uracil compound but does not contain zinc acetylacetonate and a fatty acid metal salt other than a fatty acid zinc salt.

Furthermore, it can be seen that color tone variation caused by molding temperature difference cannot be sufficiently inhibited and brown spots at the surface of a formed vinyl chloride resin molded product cannot be sufficiently reduced with the vinyl chloride resin composition of Comparative Example 3, which contains a vinyl chloride resin, a plasticizer, a uracil compound, zinc acetylacetonate, and a fatty acid metal salt other than a fatty acid zinc salt, but in which a ratio of the content of the zinc acetylacetonate relative to the content of the uracil compound is less than a specific value and a ratio of the content of the specific fatty acid metal salt relative to the content of the zinc acetylacetonate is less than a specific value.

Also, it can be seen that at least brown spots at the surface of a formed vinyl chloride resin molded product cannot be sufficiently reduced with the vinyl chloride resin compositions of Comparative Examples 4 and 5, which each contain a vinyl chloride resin, a plasticizer, a uracil compound, zinc acetylacetonate, and a fatty acid metal salt other than a fatty acid zinc salt and in each of which a ratio of the content of the zinc acetylacetonate relative to the content of the uracil compound is not less than a specific value, but in each of which a ratio of the content of the specific fatty acid metal salt relative to the content of the zinc acetylacetonate is less than a specific value.

Moreover, it can be seen that color tone variation caused by molding temperature difference cannot be sufficiently inhibited and brown spots at the surface of a formed vinyl chloride resin molded product cannot be sufficiently reduced with the vinyl chloride resin composition of Comparative Example 6, which contains zinc acetylacetonate and a fatty acid metal salt other than a fatty acid zinc salt, but which does not contain a uracil compound.

### INDUSTRIAL APPLICABILITY

According to the present disclosure, it is possible to provide a vinyl chloride resin composition with which color tone variation caused by molding temperature difference is inhibited and that is capable of forming a vinyl chloride resin molded product having few brown spots.

Moreover, according to the present disclosure, it is possible to provide a vinyl chloride resin molded product that is formed using this vinyl chloride resin composition and that has few brown spots.

Furthermore, according to the present disclosure, it is possible to provide a laminate that includes this vinyl chloride resin molded product.

## Claims

1. A vinyl chloride resin composition comprising:
a vinyl chloride resin;
a plasticizer;
a uracil compound;
zinc acetylacetonate; and
a fatty acid metal salt other than a fatty acid zinc salt, wherein
content of the zinc acetylacetonate is not less than 0.5 times content of the uracil compound, and
content of the fatty acid metal salt is not less than 1.6 times content of the zinc acetylacetonate.

2. The vinyl chloride resin composition according to claim 1, wherein the uracil compound is indicated by formula (I), shown below, 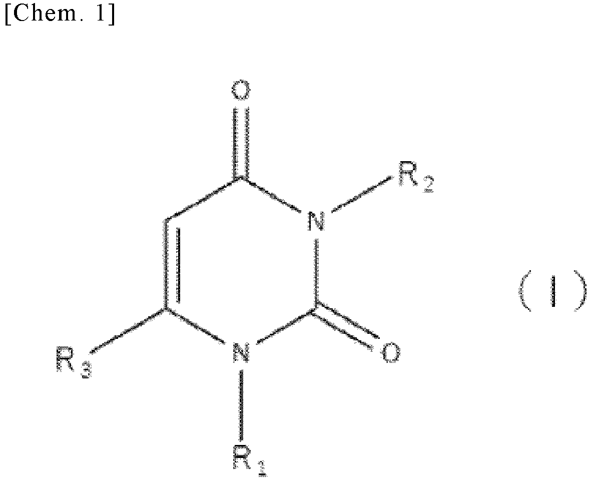 where, in formula (I):
R₁ and R₂ each represent, independently of each other, a hydrogen atom or an electron donating group; and
R₃ represents a hydrogen atom or an amino group.

3. The vinyl chloride resin composition according to claim 1, wherein the uracil compound includes 6-amino-1,3-dimethyluracil.

4. The vinyl chloride resin composition according to claim 1, wherein content of the uracil compound is 0.05 parts by mass or more relative to 100 parts by mass of the vinyl chloride resin.

5. The vinyl chloride resin composition according to claim 1, wherein the fatty acid metal salt includes either or both of a fatty acid calcium salt and a fatty acid barium salt.

6. The vinyl chloride resin composition according to claim 1, wherein the fatty acid metal salt includes a metal salt of a fatty acid having a carbon number of not less than 6 and not more than 22.

7. The vinyl chloride resin composition according to claim 1 used in powder molding.

8. The vinyl chloride resin composition according to claim 1 used in powder slush molding.

9. A vinyl chloride resin molded product obtained through molding of the vinyl chloride resin composition according to any one of claims 1 to 8.

10. The vinyl chloride resin molded product according to claim 9 for an automobile instrument panel surface skin.

11. A laminate comprising: a foamed polyurethane molded product; and the vinyl chloride resin molded product according to claim 9.

12. The laminate according to claim 11 for an automobile instrument panel.
